(19) Europäisches Patentamt
European Patent Office
Office européen des brevets

(11) **EP 4 234 923 A1**

(12) **EUROPEAN PATENT APPLICATION**

(43) Date of publication:
**30.08.2023  Bulletin 2023/35**

(21) Application number: **22158758.7**

(22) Date of filing: **25.02.2022**

(51) International Patent Classification (IPC):
**F03D 7/02** (2006.01)

(52) Cooperative Patent Classification (CPC):
**F03D 7/0276; F03D 7/0224; F03D 7/028;**
F05B 2260/821; F05B 2270/8042

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Gamesa Renewable Energy A/S**
**7330 Brande (DK)**

(72) Inventors:
• **Egedal, Per**
**7400 Herning (DK)**
• **Esbensen, Thomas**
**7400 Herning (DK)**
• **Ionita, Claudiu**
**9530 Støvring (DK)**

(74) Representative: **SGRE-Association**
**Siemens Gamesa Renewable Energy GmbH & Co KG**
**Schlierseestraße 28**
**81539 München (DE)**

(54) **OPERATIONAL TRANSITION BETWEEN PARTIAL LOAD AND FULL LOAD REGION IN WIND TURBINE CONTROL**

(57)    It is described a method of determining at least one rotational speed reference value (13, 13a, 13b) for a control system (8) of a generator system (2) including a rotor and/or of an aerodynamic adjustment system (20) of a wind turbine (1), in particular for an operational transition region between partial loading and full loading, the method comprising: obtaining at least one wind speed value (11) pertaining to a measurement region (6) upstream a rotor plane (7); deriving the at least one rotational speed reference value (13, 13a, 13b) based on the at least one wind speed value (11).

FIG 2

EP 4 234 923 A1

## Description

<u>Field of invention</u>

The present invention relates to a method and to a corresponding arrangement of determining at least one rotational speed reference value for a control system of a wind turbine. Further, the present invention relates to a method and a corresponding control system of controlling a generator system and/or an aerodynamic adjustment system of a wind turbine. Furthermore, the present invention relates to a wind turbine comprising the generator system and/or an aerodynamic adjustment system and the control system.

<u>Art Background</u>

A wind turbine comprises a wind turbine tower and a nacelle mounted on top of the tower. The nacelle harbours a rotor at which plural rotor blades are connected. The rotor is mechanically coupled to a generator system which, upon rotation of the rotor, generates electric energy. The electric energy is supplied, in particular via one or more converter sections, to a utility grid.

The wind turbine may be operated in different operational regions, including partial loading and full loading. The partial loading includes power output below rated power output and the full loading includes power output at the rated power output. Depending on the prevailing wind speed, the wind turbine operation may transition from the partial loading to the full loading and vice versa.

Conventionally, the rotational speed of the wind turbine may be controlled by adjusting the power output when the wind turbine operates at partial loading, thereby using a speed-power controller. Further conventionally, the rotational speed of the wind turbine may be controlled by adjusting the blade pitch angle when the wind turbine operates at full loading thereby in particular using a speed-pitch controller. Conventionally, a rotational speed reference supplied to the different control portions may be calculated based on the operational state of the wind turbine at the current time, such as depending on the pitch angle, the electrical power output, the rotor speed.

It has, however, been observed that thereby, control of the wind turbine may not be optimal. In particular the control in the transition region between partial loading and full loading and vice versa has been observed to require improvements, in order to ensure smooth and performant operation.

Thus, there may be a need for a method and a corresponding arrangement for determining at least one rotational speed reference value for a control system of a generator system of a wind turbine in which rotational speed reference value(s) are determined which may ensure in particular a performant operation of the wind turbine and which may ensure furthermore, that there is a smooth and effective transition between different operational regions, including a partial loading region and a full loading region.

Furthermore, there may be a need for a method and a corresponding control system for controlling a generator system and/or aerodynamic adjustment system of a wind turbine which, by using the at least one rotational speed reference value, ensures performant operation and in particular smooth transition between operational modes. Furthermore, there may be a need for a wind turbine including a generator system and a control system, enabling performant operation.

<u>Summary of the Invention</u>

This need may be met by the subject matter according to the independent claims. Advantageous embodiments of the present invention are described by the dependent claims.

According to an embodiment it is provided a method of determining at least one rotational speed reference value for a control system of a generator system including a rotor and/or an aerodynamic adjustment system of a wind turbine, in particular for an operational transition region between partial loading and full loading, the method comprising: obtaining at least one wind speed value pertaining to a measurement region upstream a rotor plane (and e.g. pertaining to a measurement time); deriving the at least one rotational speed reference value based on the at least one wind speed value.

The method may be implemented in software and/or hardware and may be performed for example by a wind turbine controller or a control section or control module thereof.

The rotational speed reference value may relate to a demanded or desired or intended rotational speed at which the rotor of the generator system or the primary rotor of the wind turbine should rotate. The rotational speed reference value relates to a rotational speed the rotor should rotate. The at least one rotational speed reference value or, for example, a difference between an actual rotational speed value and the rotational speed reference value may be supplied to the control system as an input signal. The control system may comprise one or more control portions which, depending on the rotational speed reference value and/or difference between the actual rotational speed value and the rotational speed reference value may generate an adjustment signal for adjusting operation of one or more components of the wind turbine. The adjustment signal may for example include a power adjustment signal and/or a pitch angle adjustment signal and/or an adaptable aerodynamic device adjustment signal which may for example be installed at the wind turbine blade, such as implemented as a spoiler and/or a flat. The one or more adjustment signals generated by the one or more control sections of the control system may be generated such that the error signal received as an input decreases with time. The control system may therefore comprise one or more control sections including for example PI controllers.

The generator system may comprise an electric generator, in particular synchronous or asynchronous generator, in particular a permanent magnet synchronous generator. The generator system may further comprise a converter configured to convert a variable frequency power stream received from the generator to a substantially fixed frequency power stream which may then, via for example a wind turbine transformer, be supplied to the utility grid or via a point of common coupling to which plural further wind turbines may be connected.

The method may be applied to any operational mode or working point of the wind turbine and may in particular be applied to any wind speed. However, in particular, the method may be advantageous when applied in an operational transition region between partial loading and full loading, in particular when the prevailing wind speed is around or close to a rated wind speed which may define at least partially the border between the partial loading regime and the full loading regime. The method may allow a smooth transition of the control when the wind turbine switches between different control modules or control sections of the control system, which both or all may control the rotational speed but which may output different adjustment signal types, such as a power reference and/or a pitch angle reference which are then supplied to the corresponding components of the wind turbine. In particular, the output signals or adjustment signals output by the control system may be supplied for example to a converter (when the adjustment signal is a power reference or torque reference) and/or may be output to a pitch adjustment system (when the adjustment signal is a pitch angle reference).

The method may employ measurement equipment which is configured to measure at least one wind speed value in the measurement region. The measurement region may be spaced apart from the rotor plane and is located upstream of the rotor plane (upstream with regard to the current wind direction). The measurement equipment may include a LIDAR for example installed at a nacelle or another location at the wind turbine. In other embodiments, the measurement equipment may be or comprise measurement sensors installed for example at a neighbouring wind turbine and/or at a mat mast, for example, or any weather station close to the wind turbine and located upstream of the rotor plane of the considered wind turbine.

The method may derive one or more rotational speed reference values based on the at least one wind speed value. The method may derive the one or more rotational speed references based on one or more of wind speed values measured at different measurement times.

The method may also include to obtain other wind speed values pertaining to another measurement region also located upstream of the rotor plane. The other wind speed values may be used together with the wind speed values or the at least one wind speed value in order to derive one or more rotational speed reference values.

The at least one wind speed value may be obtained or measured pertaining to a measurement time which may be earlier to an impact time at which the respective air portion for which the wind speed value is measured arrives or impacts at the rotor plane. Thus, the method may employ the at least one wind speed value pertaining to the measurement region upstream the rotor plane and pertaining to a measurement time to predict the wind speed which will arrive at a later point in time at the rotor plane, in order to derive the at least one rotational speed reference value. Thereby, the control system may be supplied with an adapted at least one rotational speed reference value earlier compared to conventional methods. Thereby, the control may be improved, in particular regarding enhanced power output, in particular in the operational transition region.

According to an embodiment of the present invention, the method further comprises obtaining at least one further wind speed value pertaining to the measurement region (and e.g. pertaining to a further measurement time), in order to have, together with the at least one wind speed value, plural wind speed values pertaining to a measurement time interval including the measurement time and the further measurement time; and deriving the at least one rotational speed reference value based on the plural wind speed values, and/or wherein the air portion for which the wind speed value is measured at the measurement region arrives at an impact time at the rotor plane, the impact time being later than the measurement time, wherein for timing a supply of the at least one rotational speed reference value to the control system, the time difference between the impact time and the measurement time is considered.

When the at least one further wind speed value is obtained which may in particular pertain to a further measurement time and considered in combination with the at least one wind speed value, the wind speed at a later point in time arriving at the rotor plane may be predicted to a higher accuracy and/or a trend may be estimated. Thereby, the control may further be improved. Embodiments may also allow to obtain still one or more further wind speed values pertaining to the same measurement region or pertaining to still one or more further measurement regions and/or pertaining to one or more further measurement times, in particular being different to the other mentioned measurement times. A subset or all of the still further wind speed values may be considered for determining the at least one rotational reference value.

According to embodiments of the present invention, still further wind speed related information may be obtained, for example by estimating the wind speed and/or utilizing or employing further wind speed sensor equipment. The further wind speed related information may be utilized in combination with the aforementioned wind speed value(s) in order to determine the at least one rotational speed reference value.

According to an embodiment of the present invention, the method further comprises processing the plural wind speed values to obtain at least one wind speed related indicator; deriving the at least one rotational speed reference value based on the at least one wind speed related indicator, wherein the wind speed related indicator includes in particular at least one of: a wind speed mean value of the plural wind speed values or a subset thereof; a wind speed change indicator indicating change of at least two of the plural wind speed values; a wind speed difference calculated from at least two of the plural wind speed values.

Processing the plural wind speed values may comprise to evaluate or consider the plural wind speed values in combination and in particular calculating one or more statistical indicators including parameters of a curve discussion. Furthermore, the one or more wind speed values may be compared or the processed wind speed values may be compared to one or more thresholds, including for example a rated wind speed. The plural wind speed values may therefore be analyzed, for example including processing the wind speed values and comparing the result of the processing for example to one or more thresholds. The thresholds may include a rated wind speed or a derivative threshold for example. The processing may also include to determine whether the wind speed values increase or decrease with time. Therefore, processing may result in a trend indicator indicating whether the wind speed increases or decreases. The processing may be adapted (in particular regarding the values of one or more thresholds) depending on the application, the constitution of the wind turbine and so forth.

The plural wind speed values may for example relate to or may form a preview vector of wind speed values relating to different wind speeds or relating to wind speed values at different distances upstream the rotor plane. The preview vector of wind speed values may for example cover wind speed values as measured in a time interval, for example spanning 5 s to 30 s. Considering and processing plural wind speed values may in an improved manner allow to estimate or predict for example at which point in time the wind speed expected to arrive at the rotor plane will cross or increase above or decrease below for example a rated wind speed. One wind speed change indicator may for example be obtained or derived as a difference between one or more wind speed values and one or more other wind speed values, in particular within the preview wind speed vector or preview time interval.

The control system may be supplied with the derived rotational reference value at a point earlier than the impact time at which the air portion for which the wind speed is measured arrives actually at the rotor plane.

According to an embodiment of the present invention, the control system is configured to at least one of: to control, in particular at partial loading, the rotational speed of the generator by adjusting power output of the generator system, in particular employing a rotational speed-generator power controller, and/or to control, in particular at full loading, the rotational speed of the generator by adjusting a blade pitch angle of at least one rotor blade mounted at the rotor coupled to the generator system, in particular employing a rotational speed-pitch angle controller.

Adjusting the power output of the generator system may comprise to generate for example a power reference for example for a converter and supplying the power reference to the converter. The converter may then control plural controllable switches, such as IGBTs, for controlling the power output of the generator to be for example the power reference.

The adjustment of the blade pitch angle may be achieved by outputting by the control system a blade pitch adjustment signal which may be supplied to a blade pitch adjustment system.

The control system may also be configured to switch between partial loading and full loading depending on for example the current wind speed being below or above, respectively, a rated wind speed and depending on one or more further operational parameter values.

According to an embodiment of the present invention, the at least one rotational speed reference value comprises at least one of: a first rotational speed reference value, in particular for a rotational speed-generator power controller; a second rotational speed reference value, in particular for a rotational speed-pitch angle controller, wherein the first rotational speed reference value and/or the second rotational speed reference value is derived based on the at least one wind speed value.

The first rotational speed reference value may be different from the second rotational speed reference value. Conventionally, neither a first nor a second rotational speed reference value may have been determined based on wind speed. Deriving and supplying a first and a second rotational speed reference value to different control portions may further improve or smooth the transition between partial loading and full loading and vice versa.

According to an embodiment of the present invention, the first rotational speed reference value is determined as a sum of a preliminary rotational speed reference value and a first offset value, and/or wherein the second rotational speed reference value is determined as a sum of a preliminary rotational speed reference value and a second offset value, wherein the first offset value and/or the second offset value is in particular derived based on at least one of: the at least one wind speed value; the at least one further wind speed value; the plural wind speed values; the at least one wind speed related indicator, wherein in particular at least one of the following applies: the first offset value is equal to zero in the partial load region; the first offset value is negative in the full load region; the second offset value is positive in the partial load region; the second offset value is zero in the full load region.

The preliminary rotational speed reference value may be defined by a setting module or a reference setting module including or based on, for example, one or more reference curves, such as speed power curve, configuration or constitution of the wind turbine or the generator, and/or operational parameters, for example. The first and second offset values may advantageously allow to adapt different rotational speed references to be supplied to different control portions for in particular improving the transition between partial loading and full loading. Setting the first offset value and/or the second offset value as described above, may improve power output and may contribute to smoothing the transition between the different operational regimes.

According to an embodiment of the present invention, at least one of the following applies: the first offset value or the first rotational speed reference value is decreased, if the wind speed related indicator indicates wind speed at the rotor at or above a rated wind speed value; the first offset value or the first rotational speed reference value is increased, if the wind speed related indicator indicates wind speed at the rotor below a rated wind speed value diminished by a first threshold (e.g. parameter2); the first offset value or the first rotational speed reference value is unchanged in other cases. Thereby, controlling for example power output may be improved.

According to an embodiment of the present invention, at least one of the following applies: the second offset value or the second rotational speed reference value is increased, if the wind speed related indicator indicates wind speed at the rotor at or below a rated wind speed value; the second offset value or the second rotational speed reference value is decreased, if the wind speed related indicator indicates wind speed at the rotor above a rated wind speed value augmented by a second threshold (e.g. parameter3); the second offset value or the second rotational speed reference value is unchanged in other cases. Thereby, control of the pitch angle may be improved regarding power output.

According to an embodiment of the present invention, partial loading includes at least one of: operating below a rated wind speed value; operating at or below a rated generator rotational speed value; operating below a rated generator power output value; and/or wherein full loading included at least one of: operating at or above a rated wind speed value; operating substantially at a rated generator rotational speed value; operating substantially at a rated generator power output value; and/or wherein the operational transition region is at least partially defined as region around a rated wind speed.

When operating below the rated wind speed, the pitch angle may be adjusted to substantially 0° and the power may be below rated power. Further, the rotational speed may be below or at a rated rotational speed. In a full loading operational regime, the rotational speed may be substantially at the rated rotational speed. Further, the pitch angle may be larger than zero and may increase with increasing wind speed. Further, at full load, the power output may be substantially at the rated power output.

According to an embodiment of the present invention, the measurement region is between 50 m and 300 m upstream of the rotor plane, wherein the rotor plane is substantially oriented to be perpendicular to a wind direction and/or wherein the at least one wind speed value is obtained from a LIDAR system, in particular installed at a nacelle which harbours the rotor.

When for example the wind speed is 10 m/s and the measurement region is around 100 m upstream of the rotor plane, the plural wind speed values relate to wind speed at an air portion which may 10 s after the measurement time arrive at the rotor plane. Thus, the method may utilize predicted or estimated wind speed for a future point in time at the rotor plane for controlling the generator system by setting at least one rotational reference value.

The LIDAR system may employ a frequency shift between emitted and received light signals due to the Doppler effect. Thereby, the emitted light may interact with aerosols comprised in the air and may be reflected from those aerosols.

According to an embodiment of the present invention, the method further comprises at least one of using estimated or measured wind speed for correction and/or to derive the at least one rotational speed reference value; calibrating the rated wind speed value; if wind speed measurement fails, deriving the at least one rotational speed reference value without using the at least one wind speed value.

Thereby, the actual wind speed impacting at the rotor at a particular point in time may be predicted or estimated in an improved manner. Thus, also the at least one rotational speed reference value may be derived in an improved manner.

Furthermore, a calibration may be performed for example when measuring power output, rotational speed depending on the wind speed as measured in the measurement region for example.

According to an embodiment of the present invention, it is provided a method of controlling a generator system and/or an aerodynamic adjustment system of a wind turbine, in particular in an operational transition region between partial load and full load, the method comprising: performing a method according to any one of the preceding embodiments; supplying the at least one rotational speed reference value to a control system of a generator system including a rotor of a wind turbine; supplying at least one operation parameter value of the wind turbine, in particular including rotational speed and/or pitch angle and/or power output to the control system, the operation parameter value in particular indicating that the wind turbine operates in an operational transition region between partial load and full load; generating, by the control system, a control signal based on the at least one rotational speed reference value and the at least one operation parameter value; supplying the control signal to the generator system, in particular to a converter coupled to a generator.

The method may also be implemented in software and/or hardware and/or may be performed for example by a portion of a wind turbine controller.

It should be understood, that features, individually or in any combination, disclosed, described, explained or applied for a method of controlling of determining at least one rotational speed reference value for a control system of a generator system may also be applied, individually or in any combination, to an arrangement for determining at least one rotational speed reference value for a control system of a generator system, according to embodiments of the present invention and vice versa.

According to an embodiment of the present invention it is provided an arrangement for determining at least one rotational speed reference value for a control system of a generator system including a rotor and/or an aerodynamic adjustment system of a wind turbine, in particular for an operational transition region between partial loading and full loading, the arrangement comprising: an input port adapted to obtain at least one wind speed value pertaining to a measurement region upstream a rotor plane (and e.g. pertaining to a measurement time); a processing module adapted to derive the at least one rotational speed reference value based on the at least one wind speed value.

According to an embodiment of the present invention it is provided a control system for a generator system and/or an aerodynamic adjustment system of a wind turbine, in particular in an operational transition region between partial load and full load, the control system comprising: an arrangement according to the preceding embodiment providing the at least one rotational speed reference value; an input section adapted to receive at least one operation parameter value of the wind turbine, in particular including rotational speed and/or pitch angle and/or power output to the control system, the operation parameter value in particular indicating that the wind turbine operates in an operational transition region between partial load and full load; a control signal generating module adapted to generate a control signal based on the at least one rotational speed reference value and the at least one operation parameter value; an output port adapted and connected to supply the control signal to the generator system, in particular to a converter coupled to a generator, wherein the control system in particular includes: a rotational speed-generator power controller; a rotational speed-pitch angle controller; wherein the control system is configured to switch between the two controllers depending on the at least one operational parameter and/or the at least one wind speed value.

According to an embodiment of the present invention it is provided a wind turbine, including: a generator system having a rotor to which plural rotor blades are mounted and/or an aerodynamic adjustment system; a wind speed measurement system adapted to measure at least one wind speed value in a measurement region upstream of a rotor plane; a control system according to the preceding embodiment communicatively coupled to the generator system and/or the aerodynamic adjustment system.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates a wind turbine according to an embodiment of the present invention;

Fig. 2 schematically illustrates a control system and a measurement system according to an embodiment of the present invention;

Fig. 3 illustrates graphs for explaining different operational wind turbine modes;

Fig. 4 illustrates graphs for explaining wind speed indicators as utilized according to embodiments of the present invention;

Figs. 5 and 6 illustrate method schemes for calculating a first offset according to embodiments of the present invention;

Figs. 7 and 8 illustrate method schemes for calculating a second offset according to embodiments of the present invention;

Fig. 9 illustrates graphs related to a transition from below to rated power according to adjustments as performed according to embodiments of the present invention;

Fig. 10 illustrates graphs related to a transition from rated power to below rated power including adjustments as performed according to embodiments of the present invention.

Detailed Description

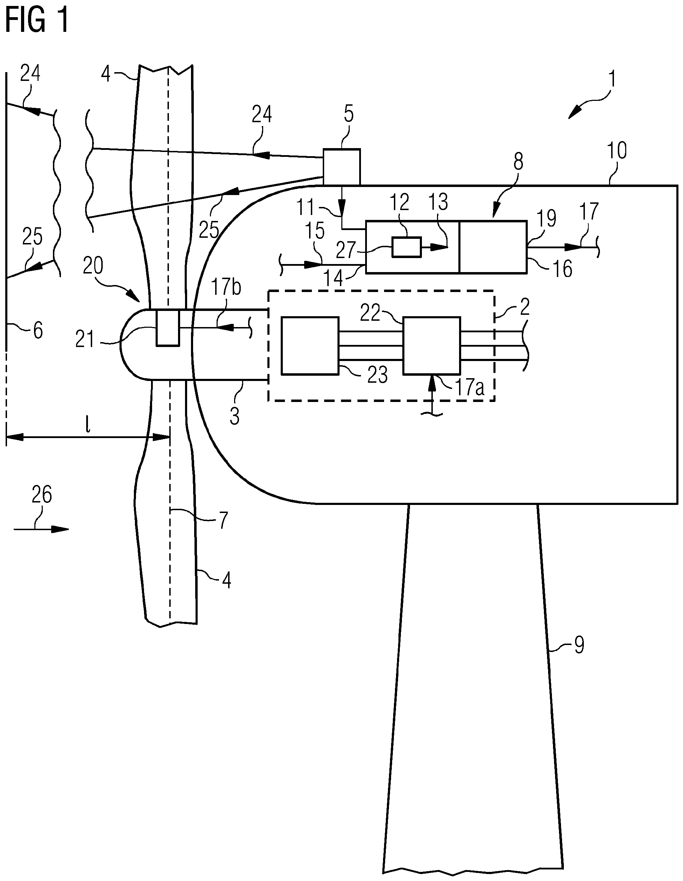

The wind turbine 1 schematically illustrated in **Fig. 1** comprises a generator system 2 having a rotor 3 at which plural rotor blades 4 are mounted. The wind turbine 1 further comprises a wind speed measurement system 5 which is adapted to measure at least one wind speed value in a measurement region 6 which is upstream of a rotor plane 7. The measurement system 5 is configured to measure at least one wind speed value 11 and supply the wind speed value (signal) 11 to the control system 8. The wind turbine 1 further comprises a control system 8 according to an embodiment of the present invention which is communicatively coupled to the generator system 2 and aerodynamic adjustment system 20.

The wind turbine 1 further comprises a wind turbine tower 9 at which a nacelle 10 is rotatably mounted. The generator system 2 as well as the rotor 3 are harboured within the nacelle 10. Furthermore, the control system 8 is also harboured within the nacelle 10.

The control system 8 comprises an arrangement 12 for determining at least one rotational speed reference value 13 for the control system 8 of the generator system 2 and aerodynamic adjustment system 20 according to an embodiment of the present invention.

The control system 8 further comprises an input section 14 configured to receive at least one operation parameter value 15 of the wind turbine. The operation parameter value 15 may for example include a rotational speed and/or a pitch angle and/or power output.

The control system 8 further comprises a control signal generating module 16 which is adapted to generate a control signal 17 based on the at least one rotational speed reference value 13 and the at least one operation parameter value 15. The control system 8 further comprises an output port 19 which is adapted and connected to supply the control signal 17 to the generator system 2 and/or to a pitch adjustment or to an aerodynamic adjustment system 20 which is configured to adapt aerodynamic characteristics of the rotor blades 4.

The control signal 17 may include a power adjustment signal 17a and/or a pitch adjustment system 17b. The power adjustment signal or power reference 17a is supplied from the control system 8 to a converter 22 which is receiving electrical output power from the generator 23 both of which are comprised in the generator system 2.

In the illustrated embodiment illustrated in Fig. 1, the aerodynamic adjustment system 20 comprises a pitch adjustment system 21 which is configured to receive the pitch adjustment signal 17b based on which the pitch adjustment system 21 adjusts the pitch angle of the rotor blades 4.

The wind speed measurement equipment 5 is implemented as a LIDAR system which emits one or more laser measurement beams 24, 25 which are emitted to the measurement region 6, where the laser measurement beams 24, 25 interact with air particles, in particular aerosols, which cause the light beams 24, 25 to be back-reflected and being detected by the LIDAR system 5.

The measurement region 6 (e.g. a plane, e.g. parallel to the rotor plane) is a region which is, relative to the wind direction 26, arranged upstream of the rotor plane 7. The distance 1 (e.g. distance between plane 6 and rotor plane 7) between the measurement region 6 and the rotor plane 7 may amount to for example between 50 m and 300 m. The back-reflected laser beams 24, 25 are processed and analyzed by the measurement equipment 5 in order to determine the wind speed at the measurement region 6.

The processing and analysis results in the at least one wind speed value 11 which is supplied to the control system 8. The control system 8 comprises an arrangement 12 for determining at least one rotational speed reference value 13 for a control system of a generator system 2 and an aerodynamic adjustment system 20. The arrangement 12 has an input port 27 which is adapted to obtain the at least one wind speed value 11 pertaining to the measurement region 6 upstream of the rotor plane 7. The arrangement 12 further comprises a not in detail illustrated processing module adapted to derive the at least one rotational speed reference value 13 based on the at least one wind speed value 11.

The control system 8 is adapted to at least control the generator system 2 as well as the aerodynamic adjustment system 20. The control system 8 may be configured as a control system of the entire wind turbine 1.

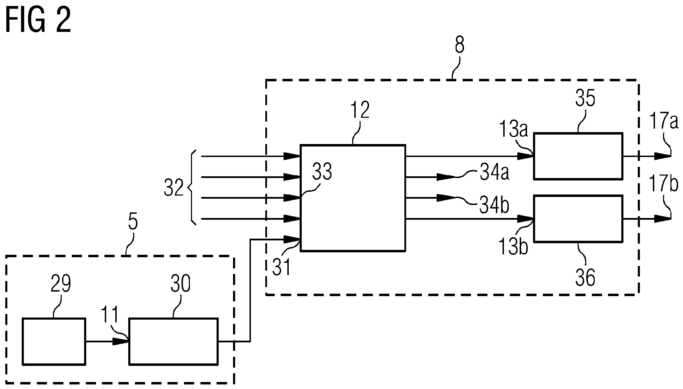

**Fig. 2** schematically illustrates an embodiment of a control system 8 and a measurement equipment 5 as employed in embodiments of the present invention. The measurement equipment 5 is configured as a LIDAR system comprising laser beam emission and reception module 29 and LIDAR signal processing module 30. The LIDAR signal processing module 30 outputs a measurement signal 31 which may for example represent at least one wind speed measurement value 11 and/or which may represent a wind speed indicator which may have been derived from one or more wind speed values 11, as explained in detail below.

The control system 8 comprises an arrangement 12 for determining at least one rotational speed reference value 13a, 13b, representing a first rotational speed reference and a second rotational speed reference. The arrangement 12 may be configured as a speed-reference handler which, beside the wind speed related measurement signal 31 receives one or more operational parameters 32 of the wind turbine, such as power output, pitch angle, a preliminary rotational speed reference 33 and other optional input parameters.

The LIDAR signal processing module 30 may be a portion of the arrangement 12 or the control system 8.

The speed reference handler 12 may also output rotational speed rotational offsets 34a, 34b representing a first rotational speed offset and a second rotational speed offset, respectively. The first rotational speed reference 13a is supplied to a rotational speed-power controller 35 and the second rotational speed reference 13b is supplied to a rotational speed-pitch controller 36. The rotational speed-power controller outputs a power control signal 17a which is supplied to the converter 22 of the generator system 2. The rotational speed-pitch controller 36 outputs a pitch angle adjustment signal 17b which is supplied to the pitch adjustment system 21 as is illustrated in Fig. 1.

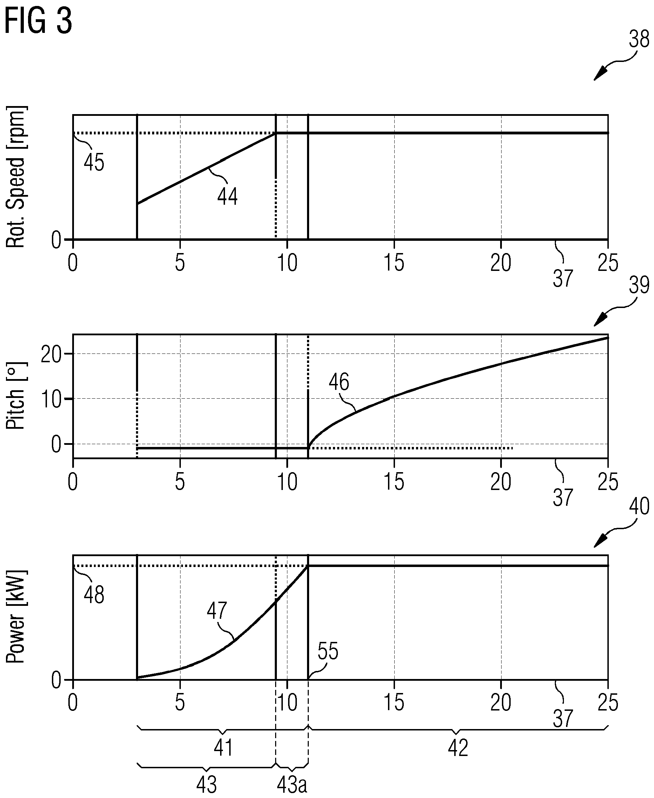

**Fig. 3** illustrates in three coordinate systems, having an abscissa 37 indicating the wind speed, the rotational speed in graph 38, the pitch angle in graph 39 and the power in graph 40 for explaining a partial load region 41 and a full load region 42 in which the wind turbine 1 is operated depending in particular on the wind speed. The partial load region 41 comprises a region 43 in which the rotational speed 44 is below a rated rotational speed 45 and a region 43a in which the rotational speed 44 is at the rated rotational speed 45. In the entire partial load region 41, the pitch angle 46 is substantially at 0° and it is above 0° in the full load region 42. In the entire partial load region 41, the output power 47 is below a rated output power 48. In the full load region 42, the output power 47 is substantially at the rated output power 48.

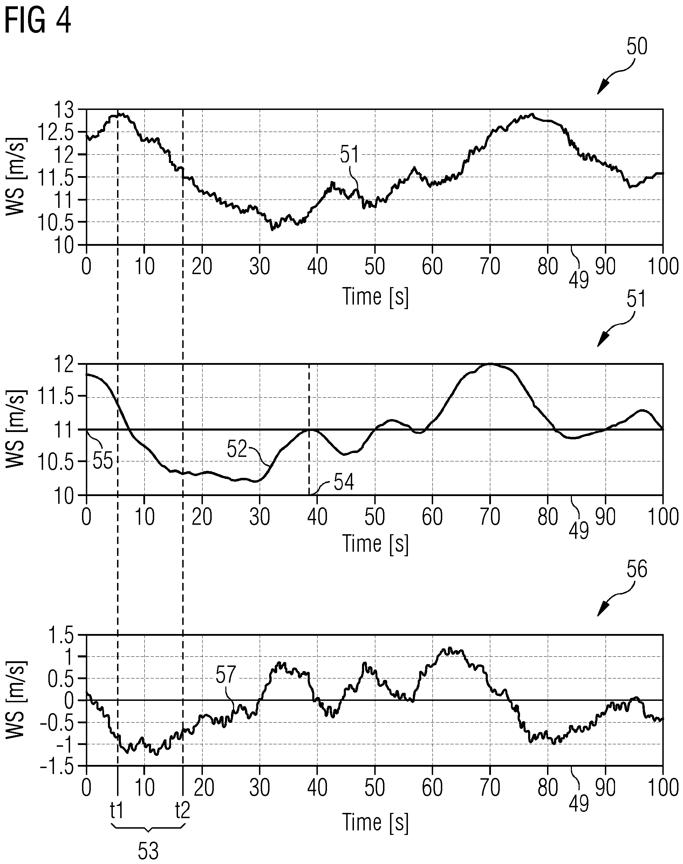

**Fig. 4** illustrates graphs having an abscissa 49 indicating the time.

Graph 50 illustrates the wind speed 51 at the rotor plane as determined by estimation or another wind determination methodology or simulation, not based on the wind measurement equipment 5. The wind speed curve 51 may be considered as representing the true wind speed at the rotor plane.

Graph 51 illustrates as a curve 52 the mean speed as determined according to embodiments of the present invention, wherein the mean wind speed is determined based on plural wind speed values 11 as obtained by the measurement equipment 5. The current time may be t1. Due to the measurement region 6 being upstream of the rotor plane 7 and spaced apart by the distance l, embodiments of the present invention allow to obtain plural wind speed values in a preview time window 53, for example amounting to about 10 s, depending on the distance 1 and the wind speed. At the point in time indicated with reference sign 54, the mean wind speed 52 reaches the rated wind speed 55.

According to an embodiment of the present invention, the mean wind speed 52 as calculated based on plural wind speed values obtained from the measurement equipment 5 is used to derive at least one rotational speed reference value as will be explained below.

The graph 56 in Fig. 4 illustrates as a curve 57 another indicator of the wind speed, namely the wind speed delta in the preview window 53. Thus, the curve 57 may be obtained by forming one or more differences between one or more wind speed values within the preview window 53. The curve 57 may therefore be utilized indicating a trend of the wind speed, being for example increasing or decreasing.

According to embodiments of the present invention, the wind speed delta may be utilized in order to set, in particular in combination with the mean wind speed 52 depicted in graph 51, the at least one rotational reference value.

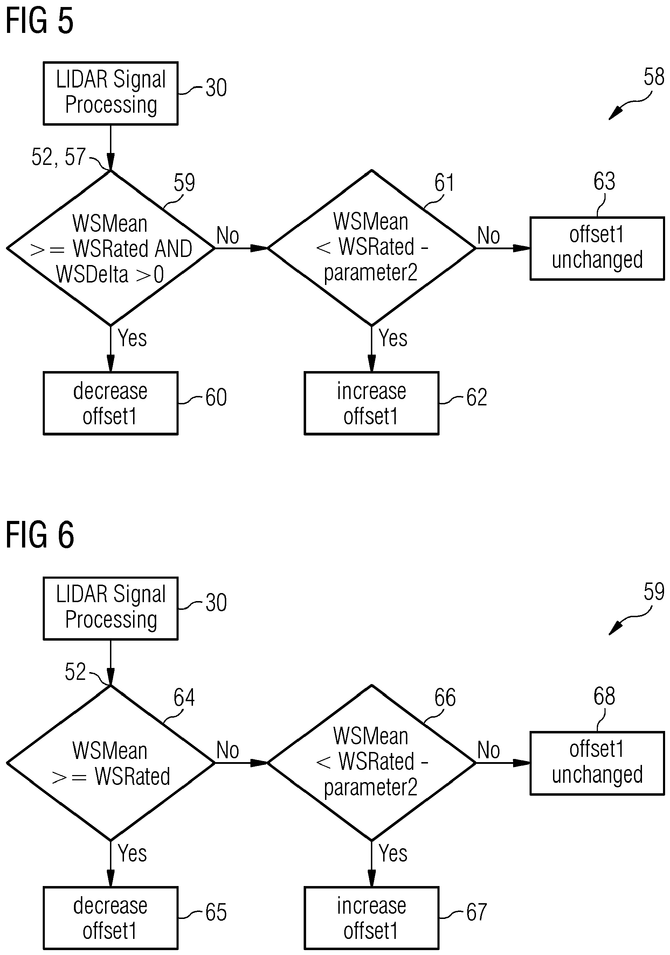

**Figs. 5 and 6** illustrate method schemes 58, 59 which may be performed within the control system 8 according to embodiments of the present invention for determination of a first rotational speed offset. The LIDAR signal processing system 30 provides the mean wind speed and the wind speed delta 52, 57 to a decision element 59. In the decision element 59 it is checked whether the mean wind speed is larger or equal to the rated wind speed and whether the wind speed delta is larger than zero. If this is the case, the first offset is decreased in a setting box 60. If the evaluation in decision element 59 evaluates as false, it is checked in a decision element 61 whether the mean wind speed is smaller than the rated wind speed diminished by a parameter2. If this results to true, the first offset is increased in a setting element 62. If the decision element 61 results in a false result, the first offset is unchanged in an element 63.

If the mean wind speed 52 provided by the LIDAR signal processing 30 in Fig. 6 is larger or equal than the rated wind speed, the decision element 64 of the method scheme 59 of Fig. 6 branches to the setting element 65 in which the first offset is decreased. If the evaluation in the decision element 64 results to false, in a further decision element 66 it is checked whether the mean wind speed is smaller than the rated wind speed diminished by a parameter2. If this results in true, the first offset is increased in a setting element 67. If the result of decision element 66 is false, the first offset is unchanged in element 68.

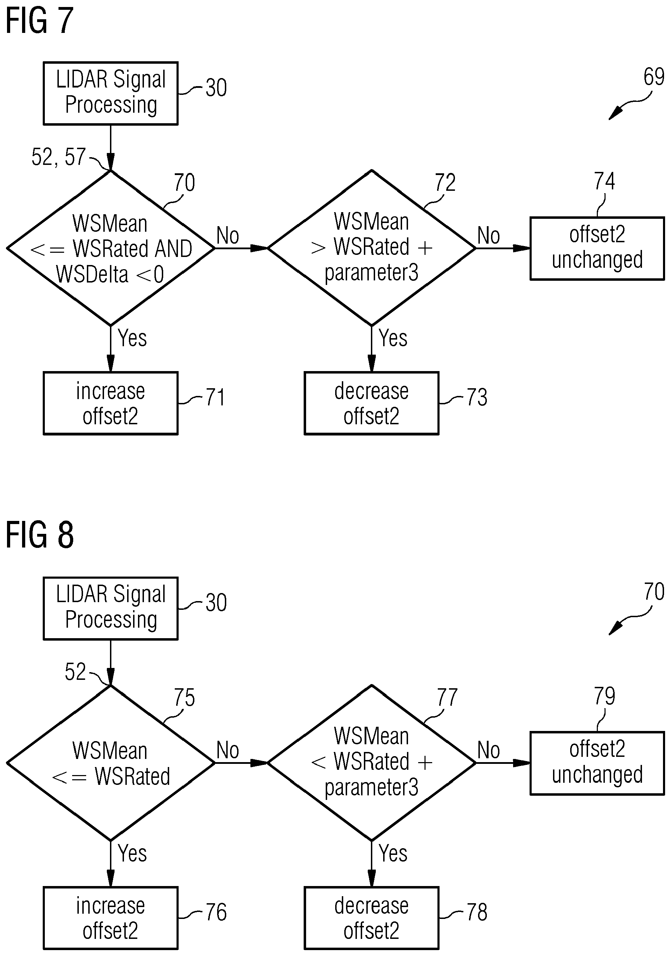

**Fig. 7 and 8** illustrate method schemes 69, 70 which may be performed by the control system 8 in order to calculate a second rotational speed offset. In the decision element 70 it is checked whether the mean wind speed is smaller or equal than the rated wind speed and whether the wind speed delta is smaller than zero. If this evaluation results to true, the second offset is increased in the setting element 71. If the evaluation of decision element 70 evaluates to false, in the decision element 72 it is checked whether the mean wind speed is greater than the rated wind speed augmented by a parameter3. If this evaluation results to true, the second offset is decreased in the setting element 73. If the evaluation of the decision element 52 results to false, the second offset is unchanged in the element 74.

In the decision element 75 of the method scheme 70 illustrated in Fig. 8, the mean wind speed 52 is evaluated whether the mean wind speed is smaller or equal than the rated wind speed. If this evaluation results to true, the second offset is increased in the setting element 76. If the evaluation of the decision element 75 results to false, it is checked in the decision element 77 whether the mean wind speed is smaller than the rated wind speed augmented by a parameter3. If this evaluation results to true, the second offset is decreased in the setting element 78. If the evaluation of decision element 77 evaluates to false, the second offset is unchanged in the element 79.

parameter2 and parameter3 may be set depending on the configuration and/or application.

The arrangement 12 illustrated in Fig. 1 is configured to perform a method of determining at least one rotational speed reference value 13 for a control system 8 of a wind turbine or in particular for a generator system 2 and/or an aerodynamic adjustment system 20. Thereby, the method comprises to obtain at least one wind speed value 11 pertaining to a measurement region 6 upstream of a rotor plane 7. The method further comprises to derive the at least one rotational speed reference value 13 based on the at least one wind speed value 11.

In the figures, the wind speed value 11 may comprise plural wind speed values which may be considered in combination, in order to derive the at least one rotational speed reference value 13. In particular, the plural wind speed values 11 may be used or processed to obtain at least one wind speed related indicator, in particular comprising a wind speed mean value, such as illustrated in Fig. 4 and labelled with reference sign 52 and/or a wind speed change indicator, in particular the wind speed delta 57 illustrated in Fig. 4. Thereby, the at least one rotational speed reference value 13 is derived by the method based on at least one of the wind speed related indicators.

By the control signal 17a, the control system 8 controls the generator system 2 regarding power output. Therein, the control signal 17a regarding output power may be generated by the speed-power controller 35 illustrated in Fig. 2 also being a portion of the control system 8.

By the control signal 17b, the control system 8 controls the blade pitch adjustment system 21, in order to adjust the blade pitch angle of at least one rotor blade 4. The control signal 17b may be generated by the speed-pitch controller 36 illustrated in Fig. 2 and also being comprised in the control system 8.

As can be appreciated from for example Fig. 2, the at least one rotational speed reference value 13 comprises a first rotational speed reference value 13a and a second rotational speed reference value 13b both of which or at least one of which is derived based on the wind speed value 11 or at least one wind speed indicator 31 as derived for example by the LIDAR signal processing module 30 illustrated in Fig. 2.

The first rotational speed reference value 13a illustrated in Fig. 2 may be derived as a sum of the preliminary rotational speed reference 33 and the first offset 34a. The second rotational speed reference value 13b illustrated in Fig. 2 may be obtained by the sum of the preliminary rotational speed reference value 33 and the second offset 34b.

The wind speed related indicator 31 may for example comprise the mean wind speed 52 and/or the wind speed delta 57 as illustrated in Fig. 4.

The control system 8 is configured to perform a method of controlling a generator system and/or an aerodynamic adjustment system of a wind turbine according to an embodiment of the present invention.

With reference to Fig. 2, embodiments of the present invention propose a method to increase the power production in the transition region (from partial loading to full loading and from full loading to partial loading) by modifying the rotational speed-power and/or the rotational speed-pitch controller references based on the wind speed measured by the LIDAR 5 in front of the rotor plane 7, in particular in combination with conventional logic.

One or more of the following features may apply according to embodiments of the present invention:
Regarding the Speed-Power Controller:
The reference provided to this controller is:

$$\text{speed\_reference1} = \text{rotor\_speed\_reference} + \text{offset1}$$

In the partial load region offset1 is equal to 0 rpm, so the speed-power controller controls the rotor speed by adjusting the power. The pitch angle follows the minimum pitch, which is more or less constant.

In the full load region offset1 becomes negative, so the power is pushed towards rated power. offset1 $\in$ [-parameter1; 0] rpm.

Regarding the Speed-Pitch Controller:
The reference provided to this controller is:

$$speed\_reference2 = rotor\_speed\_reference + offset2$$

In the partial load region offset2 is positive, so the pitch angle is pushed towards the minimum pitch.

In the full load region, offset2 becomes 0 rpm, so the rotor speed is controlled by adjusting the pitch angle. offset2E [0; parameter1] rpm.

A preview wind speed vector containing wind speed values that will reach the wind turbine in the next seconds may be created based on the LIDAR measurements, in particular based on the one or more wind speed values 11 provided by the LIDAR equipment 5, in particular the measurement acquisition module 29 of the measurement equipment 5. The preview vector may represent the effective wind speed which will be experienced by the rotor in the direction perpendicular to the rotor plane 7.

Fig. 4 illustrates an example of wind speed indicators as created or determined according to embodiments of the present invention. Thereby, t1 may be the current time step. The preview wind vector may contain the wind speed values in the time interval from t1 to t2. The average of the wind speed in the preview window (WSmean) and the wind speed delta (WSdelta) may be calculated at t1 for the interval t1 - t2. WSdelta may represent the difference between the first and the last value of the vector or other calculation indicative of the wind speed trend (for example increasing or decreasing). Using the wind speed indicator, one or both wind speed indicators, it may be determined if the wind speed will transition from below to above the rated wind speed or from the above the rated wind speed to below the rated wind speed.

According to an embodiment of the present invention, the first offset offset1 and the second offset offset2 may be changed based on the wind speed values provided by the LIDAR. If it is detected that the wind speed in a time window transitions from below to above rated wind speed (WSrated), offset1 will be decreased. This may mean that the power reference calculated by the speed-power controller is pushed towards rated power earlier, so extra power can be extracted.

If the wind speed in a time window transitions from above to below rated wind speed, offset2 is increased. This means that the pitch reference calculated by the speed-pitch controller is pushed towards minimum pitch earlier, so that extra power can be extracted.

With reference to Figs. 5 and 6, they suggest two possible but different implementations for manipulating the first offset offset1. One idea may be to foresee a transition of the wind speed from below to above the rated wind speed. This can be achieved by looking at a combination between WSmean and WSdelta (see Fig. 5) or at WSmean (see Fig. 6).

Regarding Figs. 7 and 8, they suggest two possible but different implementations, in order to derive the second offset offset2.

An idea is to foresee a transition of the wind speed from above to below rated wind speed. This may be achieved by looking at a combination between WSmean and WSdelta (see Fig. 7) or at WSmean (see Fig. 8).

It is noted that parameter2 and parameter3 are introduced to ensure that offset1 and offset2 values do not change too often. WSdelta is compared to 0 in Figs. 5 and 7, but this may in other embodiments be compared to a parameter which allows for some flexibility. The idea is to have an indication of a wind speed trend (increasing/decreasing).

A feature of an embodiment is proposed to correspond the LIDAR measured wind speeds, by comparing them to wind speed estimate calculated by the turbine controller. This may be done to remove long-term offsets from the LIDAR wind speed measurements.

The methods may compare LIDAR measured wind speed to WSrated. WSrated is known from design, but to account for modelling inaccuracies, uncertainty in performance or inaccuracy of LIDAR wind speeds, an additional feature according to an embodiment of the present invention is to introduce a model-based calibration of WSrated so that WSrated _corrrected = WSrated + parameter4. The value of parameter4 may also be determined from operational data including LIDAR information.

A fallback strategy ensures that the speed-reference handler will use the standard control approach if there is a LIDAR device failure or communication failure.

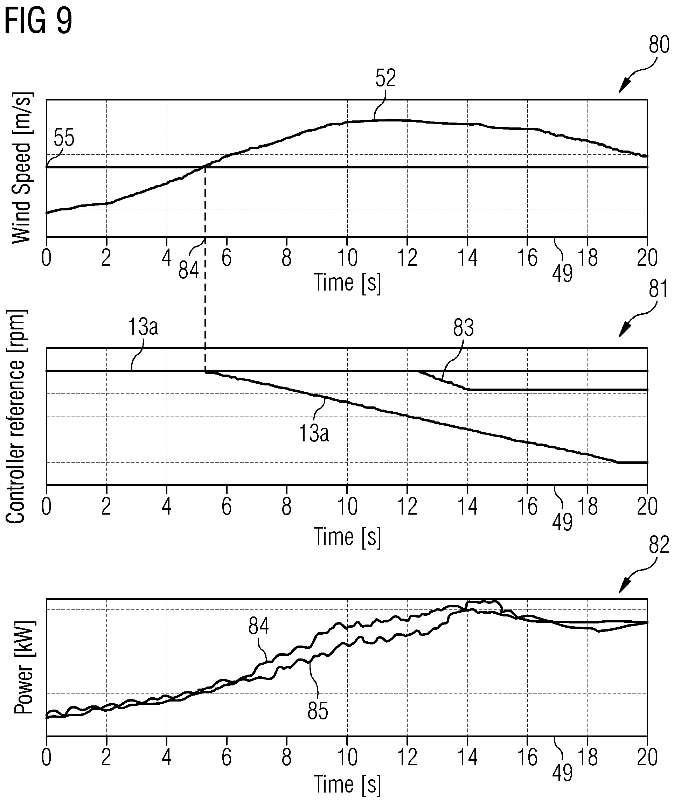

Fig. 9 illustrates graphs 80, 81, 82 having as an abscissa 49 the time. In graph 80, the means wind speed value 52 as obtained by analyzing and processing plural wind speed values 11 is depicted. Graph 81 illustrates the first rotational speed reference 13a as determined by embodiments of the present invention compared with a rotational speed reference 83 as determined using conventional methods. As is obvious from the curve 52, at the point in time labelled with reference sign 84, the mean wind speed 52 as derived from the plural wind speed values relating to the measurement region 6 crosses and exceeds the rated wind speed 55. At substantially the same point in time labelled with reference sign 84, the first rotational speed reference 13a is decreased, in particular as a declining straight line. In particular, when the method foresees that the WSmean will exceed WSrated at t ~ 5 s, the first offset offset1 is reduced earlier (compared to conventional methods). Therefore, also the first rotational speed reference 13a is also reduced earlier compared to conventional methods (curve 83). This may lead to extra power production as can be appreciated from the power output curve 84 re-suiting from the control according to rotational speed reference 13a compared to a conventional power output curve 85.

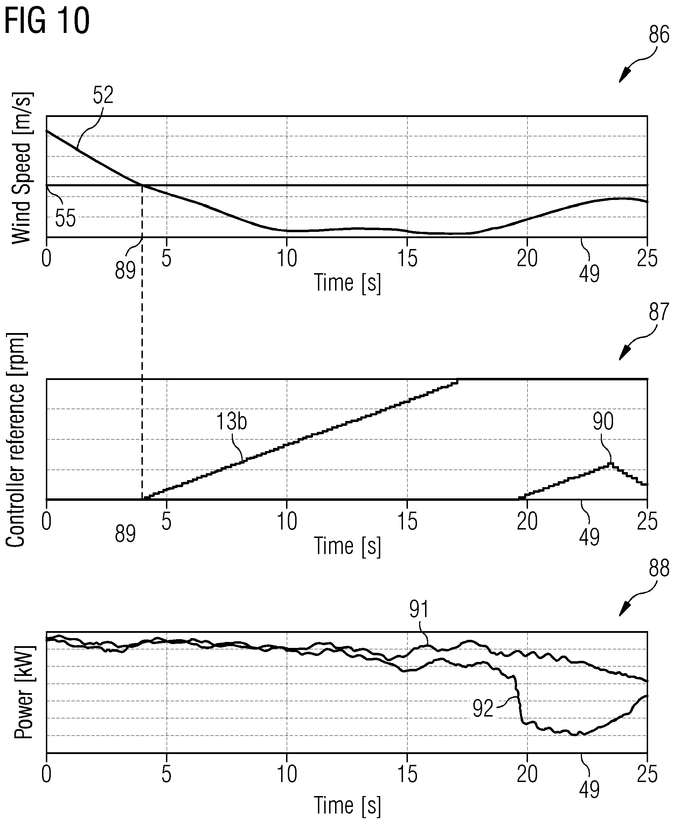

**Fig. 10** illustrates graphs 86, 87, 88 having as an abscissa 49 the time. The curve 52 illustrates the mean wind speed as derived by processing plural wind speed values 11 received from the wind speed measurement equipment 5 illustrated in Fig. 1. As can be appreciated from the graph 86, the curve 52 crosses and is below the rated wind speed 55 at a point in time labelled with reference sign 89. According to an embodiment of the present invention, at substantially the same point in time, the second rotational speed reference 13b is increased, in particular in a sloped straight line and in particular earlier than the increase of a conventional rotational reference 90. Thus, the method foresees that the WSmean will fall below WSrated at t ~ 4 s. Therefore, the second offset offset2 is increased earlier, which means that the second rotational speed reference reference 13b is also increased earlier compared to the baseline controller (curve 90). This may lead to extra power production as can be appreciated from the power output curve 91 resulting from control according to the second rotational speed reference 13b illustrated in graph 87. The power output 91 is above a conventional power output 92.

Incorporation of the LIDAR information into the speed-reference handler may improve the transition between variable loading and full loading. This may help to have a smoother and more timely transition between operation and partial load and operation at full load. This may lead to an increase of power production. Further corner improvement/shoulder improvement of the turbine power curve may be achieved.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1. Method of determining at least one rotational speed reference value (13, 13a, 13b) for a control system (8) of a generator system (2) including a rotor and/or of an aerodynamic adjustment system (20) of a wind turbine (1), in particular for an operational transition region between partial loading and full loading, the method comprising:

    obtaining at least one wind speed value (11) pertaining to a measurement region (6) upstream a rotor plane (7);
    deriving the at least one rotational speed reference value (13, 13a, 13b) based on the at least one wind speed value (11).

2. Method according to the preceding claim, further comprising:

    obtaining at least one further wind speed value pertaining to the measurement region, in order to have, together with the at least one wind speed value, plural wind speed values (11) pertaining to a measurement time interval including the measurement time and the further measurement time; and
    deriving the at least one rotational speed reference value (13, 13a, 13b) based on the plural wind speed values (11), and/or

    wherein the air portion for which the wind speed value is measured at the measurement region arrives at an impact time at the rotor plane, the impact time being later than the measurement time,
    wherein for timing a supply of the at least one rotational speed reference value (13, 13a, 13b) to the control system (8), the time difference between the impact time and the measurement time is considered.

3. Method according to the preceding claim, further comprising:

    processing the plural wind speed values (11) to obtain at least one wind speed related indicator (31, 52, 57);
    deriving the at least one rotational speed reference value (13, 13a, 13b) based on the at least one wind speed related indicator,

    wherein the wind speed related indicator includes in particular at least one of:

    a wind speed mean value (52) of the plural wind speed values or a subset thereof;
    a wind speed change indicator (57) indicating change of at least two of the plural wind speed values;
    a wind speed difference calculated from at least two of the plural wind speed values.

4. Method according to the preceding claim, wherein the control system is configured to at least one of:

to control, in particular at partial loading, the rotational speed of the generator (23) by adjusting power output of the generator system, in particular employing a rotational speed-generator power controller (35), and/or to control, in particular at full loading, the rotational speed of the generator by adjusting a blade pitch angle of at least one rotor blade (4) mounted at the rotor (3) coupled to the generator system (2), in particular employing a rotational speed-pitch angle controller (36).

5. Method according to any one of the preceding claims, wherein the at least one rotational speed reference value (13, 13a, 13b) comprises at least one of:

a first rotational speed reference value (13a), in particular for a rotational speed-generator power controller (35) ;
a second rotational speed reference value (13b), in particular for a rotational speed-pitch angle controller (36), wherein the first rotational speed reference value and/or the second rotational speed reference value is derived based on the at least one wind speed value.

6. Method according to the preceding claim,

wherein the first rotational speed reference value (13a) is determined as a sum of a preliminary rotational speed reference value (33) and a first offset value (offset1), and/or
wherein the second rotational speed reference value (13b) is determined as a sum of a preliminary rotational speed reference value (33) and a second offset value (offset2),

wherein the first offset value and/or the second offset value is in particular derived based on at least one of:

the at least one wind speed value;
the at least one further wind speed value;
the plural wind speed values;
the at least one wind speed related indicator,

wherein in particular at least one of the following applies:

the first offset value is equal to zero in the partial load region;
the first offset value is negative in the full load region;
the second offset value is positive in the partial load region;
the second offset value is zero in the full load region.

7. Method according to any one of the preceding claims when referred to claim 5, wherein at least one of the following applies:

the first offset value (offset1) or the first rotational speed reference value (13a) is decreased, if the wind speed related indicator (52, 57) indicates wind speed at the rotor at or above a rated wind speed value (55);
the first offset value (offset1) or the first rotational speed reference value (13a) is increased, if the wind speed related indicator (52, 57) indicates wind speed at the rotor below a rated wind speed value (55) diminished by a first threshold (parameter2);
the first offset value or the first rotational speed reference value is unchanged in other cases.

8. Method according to any one of the preceding claims when referred to claim 5, wherein at least one of the following applies:

the second offset value (offset2) or the second rotational speed reference value (13b) is increased, if the wind speed related indicator (52, 57) indicates wind speed at the rotor at or below a rated wind speed value (55);
the second offset value (offset2) or the second rotational speed reference value (13b) is decreased, if the wind speed related indicator indicates wind speed at the rotor above a rated wind speed value (55) augmented by a second threshold (parameter3);
the second offset value or the second rotational speed reference value is unchanged in other cases.

9. Method according to any one of the preceding claims, wherein partial loading includes at least one of:

operating below a rated wind speed value (55);

operating at or below a rated generator rotational speed value (45);
operating below a rated generator power output value (48); and/or

wherein full loading included at least one of:

operating at or above a rated wind speed value (55);
operating substantially at a rated generator rotational speed value (45);
operating substantially at a rated generator power output value (48); and/or

wherein the operational transition region is at least partially defined as region around a rated wind speed.

10. Method according to any one of the preceding claims,

wherein the measurement region (6) is between 50 m and 300 m upstream of the rotor plane (7), wherein the rotor plane is substantially oriented to be perpendicular to a wind direction (26) and/or
wherein the at least one wind speed value is obtained from a LIDAR system (5), in particular installed at a nacelle (10) which harbours the rotor (3).

11. Method according to any one of the preceding claims, further comprising at least one of:

using estimated or measured wind speed for correction and/or to derive the at least one rotational speed reference value;
calibrating the rated wind speed value;
if wind speed measurement fails, deriving the at least one rotational speed reference value without using the at least one wind speed value.

12. Method of controlling a generator system (2) and/or an aerodynamic adjustment system (20) of a wind turbine (1), in particular in an operational transition region between partial load and full load, the method comprising:

performing a method according to any one of the preceding claims;
supplying the at least one rotational speed reference value (13, 13a, 13b) to a control system (8);
supplying at least one operation parameter value (32) of the wind turbine, in particular including rotational speed and/or pitch angle and/or power output to the control system (8), the operation parameter value in particular indicating that the wind turbine operates in an operational transition region between partial load and full load;
generating, by the control system (8), a control signal (17, 17a, 17b) based on the at least one rotational speed reference value (13, 13a, 13b) and the at least one operation parameter value (32);
supplying the control signal to the generator system, in particular to a converter coupled to a generator, and/or aerodynamic adjustment system (20).

13. Arrangement (12) for determining at least one rotational speed reference value (13, 13a, 13b) for a control system (8) of a generator system (2) including a rotor and/or of an aerodynamic adjustment system (20) of a wind turbine (1), in particular for an operational transition region between partial loading and full loading, the arrangement comprising:

an input port (27) adapted to obtain at least one wind speed value (11) pertaining to a measurement region (6) upstream a rotor plane (7);
a processing module adapted to derive the at least one rotational speed reference value (13, 13a, 13b) based on the at least one wind speed value (11).

14. Control system (8) for a generator system (2) and/or an aerodynamic adjustment system (20) of a wind turbine, in particular in an operational transition region between partial load and full load, the control system comprising:

an arrangement (12) according to the preceding claim providing the at least one rotational speed reference value (13, 13a, 13b);
an input section (14) adapted to receive at least one operation parameter value (15, 32) of the wind turbine, in particular including rotational speed and/or pitch angle and/or power output to the control system, the operation parameter value in particular indicating that the wind turbine operates in an operational transition region between partial load and full load;

a control signal generating module (16) adapted to generate a control signal (17, 17a, 17b) based on the at least one rotational speed reference value (13, 13a, 13b) and the at least one operation parameter value (15, 32); an output port (19) adapted and connected to supply the control signal (17, 17a, 17b) to the generator system, in particular to a converter coupled to a generator and/or to the aerodynamic adjustment system (20),

wherein the control system in particular includes:

a rotational speed-generator power controller (35);
a rotational speed-pitch angle controller (36);

wherein the control system is configured to switch between the two controllers depending on the at least one operational parameter and/or the at least one wind speed value.

15. Wind turbine (1), including:

a generator system (2) having a rotor (3) to which plural rotor blades (4) are mounted and/or an aerodynamic adjustment system (20);
a wind speed measurement system (5) adapted to measure at least one wind speed value (11) in a measurement region (6) upstream of a rotor plane (7);
a control system (8) according to the preceding claim communicatively coupled to the generator system and/or the aerodynamic adjustment system.

**FIG 1**

FIG 2

EP 4 234 923 A1

FIG 3

FIG 4

# FIG 5

```
┌─────────────────┐
│  LIDAR Signal   │──30
│   Processing    │
└─────────────────┘
         │
52, 57 ──┤
         ▼
```

```
                                                              58
                                                             ↙
       59                          61                    63
```

```
      ◇                           ◇                 ┌──────────┐
  WSMean          No          WSMean        No      │ offset1  │
 >= WSRated AND  ────→      < WSRated -    ────→     │unchanged │
  WSDelta >0                 parameter2             └──────────┘
      ◇                           ◇
      │                           │
     Yes                         Yes
      ▼                           ▼
┌───────────┐               ┌───────────┐
│ decrease  │──60           │ increase  │──62
│  offset1  │               │  offset1  │
└───────────┘               └───────────┘
```

# FIG 6

```
┌─────────────────┐
│  LIDAR Signal   │──30
│   Processing    │
└─────────────────┘
         │
   52 ───┤
         ▼
```

```
                                                              59
                                                             ↙
       64                          66                    68
```

```
      ◇                           ◇                 ┌──────────┐
  WSMean          No          WSMean        No      │ offset1  │
 >= WSRated     ────→       < WSRated -    ────→     │unchanged │
                             parameter2             └──────────┘
      ◇                           ◇
      │                           │
     Yes                         Yes
      ▼                           ▼
┌───────────┐               ┌───────────┐
│ decrease  │──65           │ increase  │──67
│  offset1  │               │  offset1  │
└───────────┘               └───────────┘
```

## FIG 7

## FIG 8

# FIG 9

80

52

55

Wind Speed [m/s]

84

Time [s]

49

81

13a

83

13a

Controller reference [rpm]

49

Time [s]

82

84

85

Power [kW]

49

Time [s]

# FIG 10

Europäisches Patentamt

European Patent Office

Office européen des brevets

# EUROPEAN SEARCH REPORT

**Application Number**

EP 22 15 8758

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/106107 A1 (SPRUCE CHRISTOPHER [GB] ET AL) 2 May 2013 (2013-05-02) * paragraphs [0043] – [0048]; figures 3-5 * * paragraph [0048] * | 1-15 | INV. F03D7/02 |
| X | US 2010/135789 A1 (ZHENG DANIAN [US] ET AL) 3 June 2010 (2010-06-03) * paragraphs [0038], [0039]; figure 5 * | 1-15 | |
| X | US 2019/257289 A1 (SCHLIPF DAVID [DE] ET AL) 22 August 2019 (2019-08-22) * paragraphs [0007], [0022], [0076] * | 1-5,9-15 | |
| X | US 2012/128488 A1 (KRISTOFFERSEN JACOB KROGH [DK]) 24 May 2012 (2012-05-24) * paragraph [0027] * | 1-15 | |
| X | US 2009/047116 A1 (BARBU CORNELIU [US] ET AL) 19 February 2009 (2009-02-19) * paragraphs [0033] – [0047] * | 1-15 | **TECHNICAL FIELDS SEARCHED (IPC)** F03D |

The present search report has been drawn up for all claims

| Place of search | Date of completion of the search | Examiner |
|---|---|---|
| The Hague | 22 July 2022 | Biloen, David |

EPO FORM 1503 03.82 (P04C01)

## ANNEX TO THE EUROPEAN SEARCH REPORT
## ON EUROPEAN PATENT APPLICATION NO.

**EP 22 15 8758**

This annex lists the patent family members relating to the patent documents cited in the above-mentioned European search report.
The members are as contained in the European Patent Office EDP file on
The European Patent Office is in no way liable for these particulars which are merely given for the purpose of information.

**22-07-2022**

| Patent document cited in search report | | | Publication date | Patent family member(s) | | | Publication date |
|---|---|---|---|---|---|---|---|
| US 2013106107 | A1 | | 02-05-2013 | CN | 102725520 | A | 10-10-2012 |
| | | | | EP | 2516849 | A2 | 31-10-2012 |
| | | | | ES | 2610905 | T3 | 04-05-2017 |
| | | | | GB | 2476316 | A | 22-06-2011 |
| | | | | US | 2013106107 | A1 | 02-05-2013 |
| | | | | WO | 2011076295 | A2 | 30-06-2011 |
| US 2010135789 | A1 | | 03-06-2010 | CN | 102032109 | A | 27-04-2011 |
| | | | | DK | 2306003 | T3 | 15-04-2019 |
| | | | | EP | 2306003 | A2 | 06-04-2011 |
| | | | | ES | 2717654 | T3 | 24-06-2019 |
| | | | | US | 2010135789 | A1 | 03-06-2010 |
| US 2019257289 | A1 | | 22-08-2019 | CN | 109416021 | A | 01-03-2019 |
| | | | | DE | 102016212362 | A1 | 11-01-2018 |
| | | | | EP | 3482070 | A1 | 15-05-2019 |
| | | | | US | 2019257289 | A1 | 22-08-2019 |
| | | | | WO | 2018007011 | A1 | 11-01-2018 |
| US 2012128488 | A1 | | 24-05-2012 | NONE | | | |
| US 2009047116 | A1 | | 19-02-2009 | CN | 101368541 | A | 18-02-2009 |
| | | | | DK | 2025929 | T3 | 20-06-2016 |
| | | | | EP | 2025929 | A2 | 18-02-2009 |
| | | | | ES | 2573326 | T3 | 07-06-2016 |
| | | | | US | 2009047116 | A1 | 19-02-2009 |

EPO FORM P0459

For more details about this annex : see Official Journal of the European Patent Office, No. 12/82